# EUROPÄISCHE PATENTSCHRIFT

(11) **EP 3 017 928 B1**
(45) Veröffentlichungstag und Bekanntmachung des Hinweises auf die Patenterteilung: **03.05.2017**
(21) Anmeldenummer: 15188689.2
(22) Anmeldetag: 07.10.2015
(51) Int. Cl.: B29C 43/00, B29C 43/04, B29C 43/36, B29K 27/18, B29C 43/34

(54) **PRESSVORRICHTUNG UND VERFAHREN ZUM BETREIBEN DER PRESSVORRICHTUNG**
PRESS DEVICE AND METHOD FOR OPERATING THE PRESS DEVICE
DISPOSITIF DE PRESSE ET PROCÉDÉ DE FONCTIONNEMENT DU DISPOSITIF DE PRESSE

(30) Priorität: 05.11.2014 DE 102014222522
(43) Veröffentlichungstag der Anmeldung: 11.05.2016
(73) Patentinhaber: GEMÜ Gebr. Müller Apparatebau GmbH & Co. Kommanditgesellschaft, 74653 Ingelfingen (DE)
(72) Erfinder: Meinikheim, Steffen, 74653 Ingelfingen-Stachenhausen (DE)
(74) Vertreter: DREISS Patentanwälte PartG mbB

(56) Entgegenhaltungen:
- DE-A1-102013 216 597
- DE-B- 1 234 372
- GB-A- 839 966
- GB-A- 2 025 793
- US-A1- 2014 328 710

## Beschreibung

Die Erfindung betrifft eine Pressvorrichtung nach dem Oberbegriff des Anspruchs 1 sowie ein Verfahren zum Betreiben der Pressvorrichtung nach dem Oberbegriff eines nebengeordneten Anspruchs.
Es ist bekannt, dass durch Pressen von
Polytetraflourethylen, PTFE, Bauteile herstellbar sind.

Des Weiteren ist bekannt, dass insbesondere Membrane für Ventileinrichtungen eine hohe Lebensdauer und Zuverlässigkeit aufweisen müssen.

Aus der DE 2 253 589 A ist ein Verfahren zum Herstellen von Membranen bekannt, bei dem durch Verpressen von PTFE-Pulver und anschließenden Sintern Membrane hergestellt werden. Das PTFE-Pulver wird in einen Pressraum eingebracht. Mit Hilfe einer Füllschablone wird das Pulver gleichmäßig verteilt. In einem Arbeitsgang wird das Pulver dort zu einer kompletten Membran einschließlich eingepresstem Bolzen geformt. Die Membran wird schließlich nach einer mehrstündigen Lagerung gesintert und abgekühlt.

Aus DE-B-12 34 372 ist eine Pressvorrichtung zur Herstellung eines Grünlings für eine Membran einer Ventileinrichtung aus einem Granulat bekannt, wobei das Granulat auf einer ersten Formhälfte anordenbar ist und dass eine zweite Formhälfte in Richtung der ersten Formhälfte zur Herstellung des Grünlings pressbar ist. Aufgabe der Erfindung ist es, eine gleichbleibend hohe Qualität des hergestellten Grünlings und der Membran zu erreichen.

Die der Erfindung zugrunde liegende Aufgabe wird durch eine Pressvorrichtung nach dem Anspruch 1 sowie durch ein Verfahren zum Betreiben der Pressvorrichtung nach einem nebengeordneten Anspruch gelöst. Vorteilhafte Weiterbildungen sind in den Unteransprüchen angegeben. Für die Erfindung wichtige Merkmale befinden sich ferner in der nachfolgenden Beschreibung und in den Zeichnungen, wobei die Merkmale sowohl in einer Alleinstellung als auch in unterschiedlichen Kombinationen für die Erfindung wichtig sein können, sofern diese unter dem Schutzbereich der unabhängigen Ansprüche fallen, ohne dass hierauf nochmals explizit hingewiesen wird.

Dadurch, dass eine Distanz zwischen einer zweiten Formhälfte und einer ersten Formhälfte mit einem zwischen den Formhälften angeordneten Granulat während einer Rotation der zweiten Formhälfte gegenüber der ersten Formhälfte verringerbar ist, wird vorteilhaft eine homogene Verteilung des Granulats erreicht. Dies wirkt sich vorteilhaft auf die Qualität der hergestellten Membran aus, da keine Unregelmäßigkeit der Materialverteilung in der Membran in radialer Richtung vorhanden sind und so während des Betriebs der Membran radial auftretende Kräfte nicht zu unterschiedlichen Beanspruchungen der Membran und damit zu keiner Zerstörung der Membran führt.

In einer vorteilhaften Ausführungsform ist ein Membran-Pin vor der Anordnung des Granulats in einer federnd gelagerten Hülse anordenbar. Eine Bewegung der Hülse während der Verringerung der Distanz und/oder während des Pressvorgangs ist durch einen Anschlag begrenzbar. Durch die federnd gelagerte Hülse wird vorteilhaft auch eine Verteilung des Granulats in einen Rücksprung, der zur Halterung des Membran-Pins in dem Grünling vorhanden ist, gewährleistet. Die Rotation während der Verringerung der Distanz führt vorteilhaft dazu, dass sich im Bereich der Membran-Pin innerhalb des Granulats umfänglich ein im Wesentlichen gleicher radialer Druck ausbildet, was auch im Bereich der Membran-Pin zu einer homogenen Verteilung des Granulats in dem Grünling führt.

In einer vorteilhaften Ausführungsform ist die zweite Formhälfte gegenüber der ersten Formhälfte mit einer konstanten Drehgeschwindigkeit rotierbar. Die konstante Drehgeschwindigkeit führt vorteilhaft dazu, dass vor der Pressung eine homogene Verteilung des Granulats vorhanden ist.

In einer vorteilhaften Ausführungsform ist die zweite Formhälfte gegenüber der ersten Formhälfte mit einer oszillierenden Drehrichtung rotierbar. Durch die oszillierende Drehrichtung kann vorteilhaft die homogene Verteilung des Granulats erreicht werden.

In einer vorteilhaften Ausführungsform sind die erste und die zweite Formhälfte insbesondere in einem radial außen liegenden Bereich im Wesentlichen flach ausgebildet und im Wesentlichen parallel zueinander angeordnet. Damit kann vorteilhaft eine flächige Pressung erfolgen, wodurch die homogene Struktur des Grünlings erreicht wird. Die flache Ausbildung der beiden Formhälften vereinfacht gegenüber anderen Formen sowohl die homogene Verteilung des Granulats über die Rotation der zweiten Formhälfte als auch die homogene Pressung, da beide Formhälften bei der Pressung im Wesentlichen eine gleiche Kraft auf das gleichmäßig verteilte Granulat bewirken können. Vorteilhaft erfolgt die Formgebung der Membran, beispielsweise zu einer Paraboloidform oder einer Kugelabschnittform, nach einem Sinter-Schritt. So können unterschiedlich geformte Membrane mit einer vorteilhaft homogenen Materialstruktur hergestellt werden.

Weitere Merkmale, Anwendungsmöglichkeiten und Vorteile der Erfindung ergeben sich aus der nachfolgenden Beschreibung von den Ausführungsbeispielen der Erfindung, die in den Figuren dargestellt sind. Dabei bilden alle beschriebenen oder dargestellten Merkmale für sich oder in beliebiger Kombination Gegenstand der Erfindung, sofern diese unter dem Schutzbereich der unabhängigen Ansprüche fallen. Für funktionsäquivalente Größen und Merkmale werden in allen Figuren auch bei unterschiedlichen Ausführungsformen die gleichen Bezugszeichen verwendet.

Nachfolgend werden beispielhafte Ausführungsforme der Erfindung unter Bezugnahme auf die Zeichnung erläutert. Die Zeichnung zeigt:
- Figuren 1 bis 5: jeweils eine schematische Schnittdarstellung durch eine Pressvorrichtung; und
- Figur 6: ein schematisches Ablaufdiagramm.

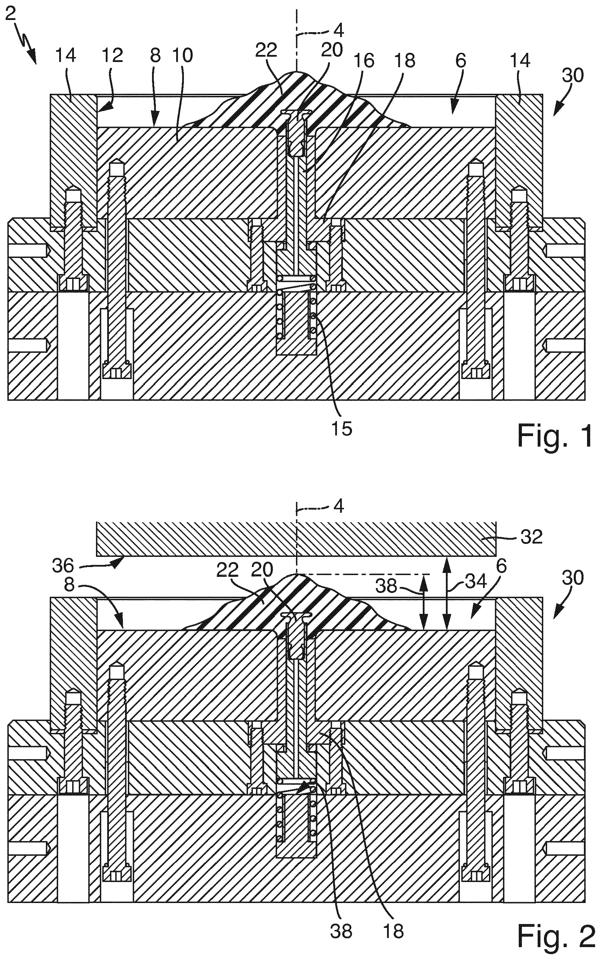

Figur 1 zeigt in schematischer Form einen Teil einer Pressvorrichtung 2, die im Wesentlichen rotationssymmetrisch um eine Mittenachse 4 ausgebildet ist. Figur 1 zeigt den Querschnitt der Pressvorrichtung 2 mit einem Aufnahmeraum 6, der im Wesentlichen durch eine flache kreisringförmige Fläche 8 eines Aufnahmeteils 10 und eine Zylinderinnenfläche 12 eines Begrenzungsteils 14 begrenzt wird. Das Aufnahmeteil 10 weist eine mittige Öffnung auf, in der eine mittels einer Druckfeder 15 federnd gelagerte Hülse 16 entlang der Mittenachse 4 geführt in einem Aufnahmeteil 18 aufgenommen ist. In der Hülse 16 ist ein Membran-Pin 20 anordenbar, der zur Herstellung eines Grünlings mit dem Grünling verbunden wird. Entsprechend ist die Hülse 16 zur Aufnahme des Membran-Pins 20 ausgebildet. Mittels einer nicht gezeigten Dosiereinrichtung wird im Wesentlichen mittig in dem Aufnahmeraum 6 ein Granulat 22 angeordnet und aufgehäuft. Die in Figur 1 gezeigten Elemente zur Begrenzung des Aufnahmeraums 6, also das Begrenzungsteil 14, das Aufnahmeteil 10, die Hülse 16, sowie das Aufnahmeteil 18 bilden eine erste Formhälfte 30.

In Figur 2 ist gezeigt, wie eine zweite Formhälfte 32 nach der Anordnung des Granulats 22 in dem Aufnahmeraum 6 auf eine Distanz 34 auf die erste Formhälfte 30 zugefahren wird. Die zweite Formhälfte 32 weist eine im Wesentlichen flache kreisförmige Fläche 36 auf, die im Wesentlichen parallel zu der Kreisringfläche 8 angeordnet ist. Die Distanz 34 ist größer als eine Distanz 38, die einer erwarteten Höhe der mittigen Granulatanhäufung 22 entspricht. Selbstverständlich kann durch die Anhäufung des Granulats 22 die federnd gelagerte Hülse 16 mit dem Pin 20 sich bereits ein Stück weit in Richtung hin zu einem Anschlag 38 bewegen, was beispielsweise durch das Gewicht des Granulats 22 verursacht sein kann.

Von der Distanz 34 ausgehend wird die zweite Formhälfte 32 in eine Drehbewegung um die Mittenachse 4 versetzt und während der Drehbewegung bzw. Rotation der Mittenachse 4 wird die zweite Formhälfte 32 weiter in Richtung der ersten Formhälfte 30 bewegt. Die Rotation der zweiten Formhälfte umfasst eine Beschleunigung der zweiten Formhälfte 32 auf eine konstante Drehgeschwindigkeit im Bereich von 40 bis 100 Umdrehungen pro Minute, insbesondere 50 bis 70 Umdrehungen pro Minute, und insbesondere 60 Umdrehungen pro Minute. Die zweite Formhälfte 32 kann auch eine oszilierende Drehbewegung aufweisen, bei der die zweite Formhälfte in eine erste Drehrichtung um im Wesentlichen 180 Grad im Gradmaß gedreht wird und anschließend in eine zweite, der ersten Drehrichtung entgegengesetzte Drehrichtung um im Wesentlichen 180 Grad gedreht wird.

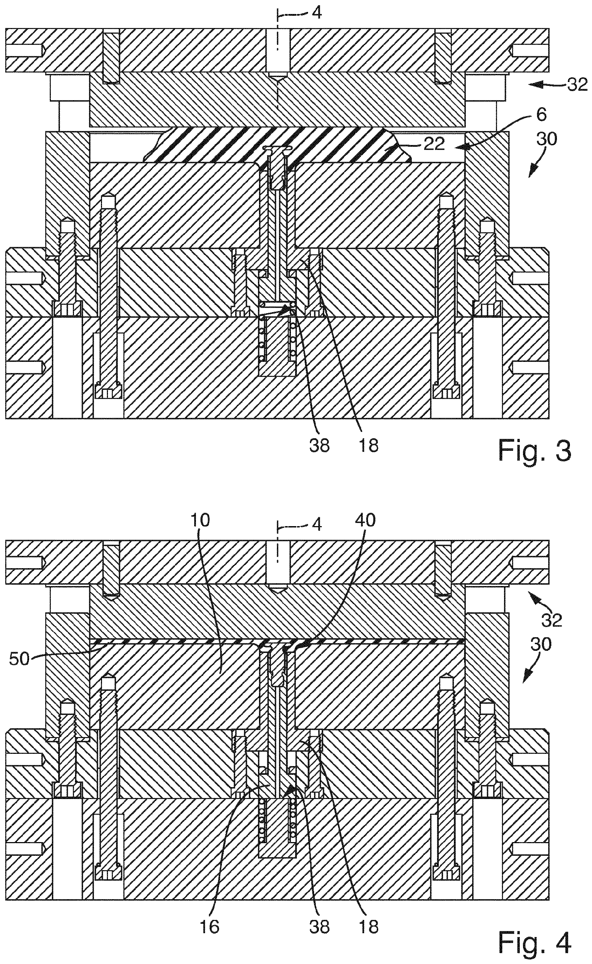

In Figur 3 ist gezeigt, wie sich die um die Mittenachse 4 rotierende zweite Formhälfte 32 auf die erste Formhälfte 30 zubewegt, wobei durch die Rotation und die Bewegung auf die erste Formhälfte 30 zu das Granulat 22 in dem Aufnahmeraum 6 homogen verteilt wird.

In Figur 4 ist gezeigt, wie die Rotation der zweiten Formhälfte 32 gestoppt ist und eine hydraulische Pressung der zweiten Formhälfte 32 in Richtung der ersten Formhälfte 30 entlang der Mittenlängsachse 4 vorgenommen wird. Der Aufnahmeraum 6 ist durch das Granulat 22 im Wesentlichen vollständig ausgefüllt. Durch die vorrangegangenen erläuterten Schritte wird vorteilhaft auch ein Hinterschnitt 40 vollständig mit Granulat ausgefüllt. Die federnd gelagerte Hülse 16 befindet sich an dem Anschlag 38. Im Bereich des Hinterschnitts 40 bilden die Hülse 16 und das Aufnahmeteil 18 hin zum Granulat 22 im Wesentlichen eine kreisringförmige Fläche. Eine zum Hinterschnitt 40 orientierte Fläche des Aufnahmeteils 18 weist im Querschnitt eine radial nach außen orientierte Innenwölbung auf, um ein Ablösen des Grünlings 50 zu erleichtern. Eine zum Hinterschnitt 40 orientierte Fläche des Aufnahmeteils 10 weist im Querschnitt eine radial nach innen orientierte Außenwölbung auf, um ein Ablösen des Grünlings 50 zu erleichtern. Nach dem Pressen erfolgt ein Anheben und Wegführen der zweiten Formhälfte 32 von der ersten Formhälfte 30.

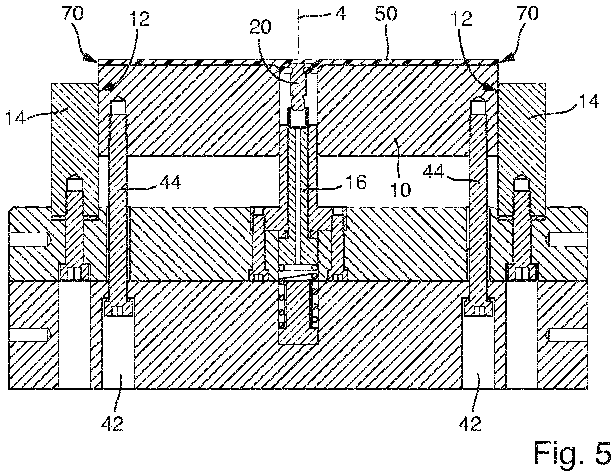

Gemäß Figur 5 werden Räume 42 mit Druckluft gefüllt, was über Stangen 44 zu einem Anheben des Aufnahmeteils 10 führt. Die Membran-Pin 20 wird aus der Hülse 16 gefahren und der Grünling 50 löst sich von der Zylinderinnenfläche 12. Der Grünling 50 wird mittels einer weiteren Vorrichtung bzw. einer Saugvorrichtung noch aufliegend auf den Aufnahmeteil 10 um die Mittenachse 4 gedreht, um sich von dem Aufnahmeteil 10 bruch- und zerstörungsfrei abzulösen. Anschließend wird der Grünling 50 mit dem eingelagerten Membran-Pin 20 entnommen und einem Sintervorgang zugeführt.

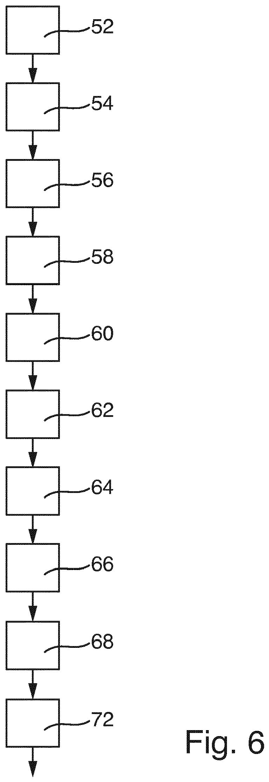

Figur 6 zeigt ein schematisches Ablaufdiagramm zur Herstellung des Grünlings 50. In einem ersten Schritt 52 wird, wie in Figur 1 gezeigt, zunächst der Membran-Pin 20 in die federnd gelagerte Hülse 16 eingebracht. In einem zweiten Schritt 54 wird das Granulat 22 bevorzugt mittig, wie in Figur 1 gezeigt, nach Einbringung des Membran-Pins 20 in der ersten Formhälfte 30 angehäuft.

In einem dritten Schritt 56 wird die zweite Formhälfte 32, wie in Figur 2 gezeigt, bis auf die Distanz 34 in Richtung auf die erste Formhälfte 30 zu bewegt.

In einem vierten Schritt 58 beginnt ab der Distanz 34 sich die zweite Formhälfte 32 um die Mittenachse 4 zu drehen und gleichzeitig weiter zu schließen. Dieser Dreh- und Schließvorgang ist beispielhaft in Figur 3 gezeigt.

In einem fünften Schritt 60 wird bei einer weiteren Distanz, wie in Figur 4 gezeigt, der gleichzeitige Dreh- und Schließvorgang beendet.

In einem sechsten Schritt 62 wird mittels einer hydraulischen Pressung das nunmehr homogen verteilte Granulat 22 zwischen der ersten und der zweiten Formhälfte 30, 32 gepresst.

In einem siebten Schritt 64 wird nach dem Beenden des Pressens die zweite Formhälfte 32 von der ersten Formhälfte 30 wegbewegt und gleichzeitig gedreht beispielsweise mit einem Winkel von mindestens 90° und maximal 720°, was Ablösung der zweiten Formhälfte 32 von dem Grünling 50 ohne Zerstörung des Grünlings gewährleistet.

In einem achten Schritt 66 wird nach dem Drehvorgang im Schritt 64 die zweite Formhälfte 32 in einem Eilgang von der ersten Formhälfte 30 wegbewegt.

In einem neunten Schritt 68 wird, wie in Figur 5 gezeigt, der Grünling 50 noch aufliegend auf dem Aufnahmeteil 10 aus dem Aufnahmeraum 6 hinausbewegt, wodurch ein Rand 70 von dem Begrenzungsteil 14 abgelöst wird.

In einem zehnten Schritt 72 wird der noch auf dem Aufnahmeteil 10 liegende Grünling 50 beispielsweise mit einem Sauggreifer oder ähnlichem um die Mittenachse 4 mit einem Winkel von mindestens 10° gedreht, um ein zerstörungsfreies Ablösen des Grünlings 50 von dem Aufnahmeteil 10 zu ermöglichen.

## Patentansprüche

1. Eine Pressvorrichtung (2) zur Herstellung eines Grünlings (50) für eine Membran einer Ventileinrichtung aus einem Granulat (22), **dadurch gekennzeichnet, dass** das Granulat (22) auf einer ersten Formhälfte (30) anordenbar ist, dass eine Distanz (34) zwischen einer zweiten Formhälfte (32) und der ersten Formhälfte (30) mit dem zwischen den Formhälften (30, 32) angeordneten Granulat (22) während einer Rotation der zweiten Formhälfte (32) gegenüber der ersten Formhälfte (30) verringerbar ist, und dass die zweite Formhälfte (32) in Richtung der ersten Formhälfte (30) zur Herstellung des Grünlings (50) pressbar ist.

2. Die Pressvorrichtung (2) nach dem Anspruch 1, wobei ein Membran-Pin (20) vor der Anordnung des Granulats (22) in einer federnd gelagerten Hülse (16) anordenbar ist, und wobei eine Bewegung der Hülse (16) während der Verringerung der ersten Distanz (32) und/oder während des Pressvorgangs durch einen Anschlag (38) begrenzbar ist.

3. Die Pressvorrichtung (2) nach Anspruch 1 oder 2, wobei die zweite Formhälfte (32) gegenüber der ersten Formhälfte (30) mit einer konstanten Drehgeschwindigkeit in eine Drehrichtung rotierbar ist.

4. Die Pressvorrichtung (2) nach dem Anspruch 1 oder 2, wobei die zweite Formhälfte (32) gegenüber der ersten Formhälfte (30) mit einer oszillierenden Drehbewegung rotierbar ist, wobei die oszillierende Drehbewegung eine erste Drehbewegung in eine erste Drehrichtung und eine anschließende zweite Drehbewegung in eine zweite, der ersten Drehbewegung entgegengesetzte Drehrichtung umfasst.

5. Die Pressvorrichtung (2) nach einem der vorstehenden Ansprüche, wobei die Rotation der zweiten Formhälfte (32) bei einer weiteren, gegenüber der ersten Distanz verringerten Distanz beendbar ist, und wobei nach dem Ende der Rotation die Pressung durchführbar ist.

6. Die Pressvorrichtung (2) nach einem der vorstehenden Ansprüche, wobei die erste und die zweite Formhälfte (30, 32) insbesondere in einem radial außen liegenden Bereich im Wesentlichen flach ausgebildet und im Wesentlichen parallel zueinander angeordnet sind.

7. Die Pressvorrichtung (2) nach einem der vorstehenden Ansprüche, wobei das Granulat (22) Polytetraflourethylen umfasst.

8. Ein Verfahren zum Betreiben einer Pressvorrichtung (2) zur Herstellung eines Grünlings (50) für eine Membran einer Ventileinrichtung aus einem Granulat (22), **dadurch gekennzeichnet, dass** das Granulat (22) auf einer ersten Formhälfte (30) angeordnet wird, dass eine Distanz (34) zwischen einer zweite Formhälfte (32) und der ersten Formhälfte (30) mit dem zwischen den Formhälften (30, 32) angeordneten Granulat (22) während einer Rotation der zweiten Formhälfte (32) gegenüber der ersten Formhälfte (30) verringert wird, und dass die zweite Formhälfte (32) in Richtung der ersten Formhälfte (30) zur Herstellung des Grünlings (50) gepresst wird.

9. Das Verfahren nach Anspruch 8, wobei ein Membran-Pin (20) vor der Anordnung des Granulats (22) in einer federnd gelagerten Hülse (16) angeordnet wird, und wobei eine Bewegung der Hülse (16) während der Verringerung der Distanz (34) und/oder während des Pressvorgangs durch einen Anschlag (38) begrenzt ist.

10. Das Verfahren nach Anspruch 8 oder 9, wobei die zweite Formhälfte (32) gegenüber der ersten Formhälfte (30) mit einer konstanten Drehgeschwindigkeit in eine Drehrichtung rotiert wird.

11. Das Verfahren nach Anspruch 8 oder 9, wobei die zweite Formhälfte (32) gegenüber der ersten Formhälfte (30) mit einer oszillierenden Drehbewegung rotiert wird, wobei die oszillierende Drehbewegung eine erste Drehbewegung in eine erste Drehrichtung und eine anschließende zweite Drehbewegung in eine zweite, der ersten Drehbewegung entgegengesetzte Drehrichtung umfasst.

12. Das Verfahren nach einem der Ansprüche 8 bis 11, wobei die Rotation der zweiten Formhälfte (32) bei einer weiteren, gegenüber der ersten Distanz verringerten Distanz beendet wird, und wobei nach dem Ende der Rotation die Pressung durchgeführt wird.

13. Das Verfahren nach einem der Ansprüche 8 bis 12, wobei die erste und die zweite Formhälfte (30, 32), insbesondere in einem radial außen liegenden Bereich im Wesentlichen flach ausgebildet und im Wesentlichen parallel zueinander angeordnet sind.

14. Das Verfahren nach einem der Ansprüche 8 bis 13, wobei das Granulat (22) Polytetraflourethylen umfasst.

## Claims

1. A press apparatus (2) for producing a green compact (50) for a diaphragm of a valve device from a granulate (22), **characterised in that** the granulate (22) can be arranged on a first mould half (30), that a distance (34) between a second mould half (32) and the first mould half (30), with the granulate (22) arranged between the mould halves (30, 32), can be reduced during a rotation of the second mould half (32) relative to the first mould half (30), and that the second mould half (32) can be pressed in the direction of the first mould half (30) in order to produce the green compact (50).

2. The press apparatus (2) according to claim 1, wherein a diaphragm pin (20) can be arranged in a spring-mounted sleeve (16) prior to arrangement of the granulate (22), and wherein a movement of the sleeve (16) during the reduction of the first distance (32) and/or during the pressing operation can be limited by means of a stop (38).

3. The press apparatus (2) according to claim 1 or 2, wherein the second mould half (32) can be rotated relative to the first mould half (30) with a constant speed of rotation in one direction of rotation.

4. The press apparatus (2) according to claim 1 or 2, wherein the second mould half (32) can be rotated relative to the first mould half (30) with an oscillating rotary movement, said oscillating rotary movement comprising a first rotary movement in a first direction of rotation and a subsequent second rotary movement in a second direction of rotation contrary to the first rotary movement.

5. The press apparatus (2) according to one of the preceding claims, wherein the rotation of the second mould half (32) can be ended at a further distance, reduced in comparison with the first distance, and wherein the pressing can be carried out following the end of the rotation.

6. The press apparatus (2) according to one of the preceding claims, wherein the first and the second mould half (30, 32) are substantially flat in design, in particular in an outer radial region, and are arranged substantially parallel to one another.

7. The press apparatus (2) according to one of the preceding claims, wherein the granulate (22) comprises polytetrafluoroethylene.

8. A method for operating a press apparatus (2) for producing a green compact (50) for a diaphragm of a valve device from a granulate (22), **characterised in that** the granulate (22) is arranged on a first mould half (30), that a distance (34) between a second mould half (32) and the first mould half (30), with the granulate (22) arranged between the mould halves (30, 32), is reduced during a rotation of the second mould half (32) relative to the first mould half (30), and that the second mould half (32) is pressed in the direction of the first mould half (30) in order to produce the green compact (50).

9. The method according to claim 8, wherein a diaphragm pin (20) is arranged in a spring-mounted sleeve (16) prior to arrangement of the granulate (22), and wherein a movement of the sleeve (16) during the reduction of the distance (34) and/or during the pressing operation is limited by means of a stop (38).

10. The method according to claim 8 or 9, wherein the second mould half (32) is rotated relative to the first mould half (30) with a constant speed of rotation in one direction of rotation.

11. The method according to claim 8 or 9, wherein the second mould half (32) is rotated relative to the first mould half (30) with an oscillating rotary movement, said oscillating rotary movement comprising a first rotary movement in a first direction of rotation and a subsequent second rotary movement in a second direction of rotation contrary to the first rotary movement.

12. The method according to one of the claims 8 to 11, wherein the rotation of the second mould half (32) is ended at a further distance, reduced in comparison with the first distance, and wherein the pressing is carried out following the end of the rotation.

13. The method according to one of the claims 8 to 12, wherein the first and the second mould half (30, 32) are substantially flat in design, in particular in an outer radial region, and are arranged substantially parallel to one another.

14. The method according to one of the claims 8 to 13, wherein the granulate (22) comprises polytetrafluoroethylene.

## Revendications

1. Dispositif de pressage (2) pour la fabrication d'une ébauche (50) pour une membrane d'un dispositif de vanne, à partir d'un granulé (22), **caractérisé en ce que** le granulé (22) peut être disposé sur une première moitié de moule (30), **en ce qu'**une distance (34) entre une deuxième moitié de moule (32) et la première moitié de moule (30) avec le granulé (22) disposé entre les moitiés de moule (30, 32) peut être réduite pendant une rotation de la deuxième moitié de moule (32) par rapport à la première moitié de moule (30) et **en ce que** la première moitié de moule (30) peut être pressée pour la fabrication de l'ébauche (50).

2. Dispositif de pressage (2) selon la revendication 1, une broche de membrane (20) pouvant être disposée, avant la disposition du granulé (22), dans un manchon (16) logé de manière suspendue et un déplacement du manchon (16) pendant la réduction de la première distance (32) et/ou pendant le processus de pressage pouvant être limité par une butée (38).

3. Dispositif de pressage (2) selon la revendication 1 ou 2, la deuxième moitié de moule (32) pouvant être mise en rotation par rapport à la première moitié de moule (30) avec une vitesse de rotation constante dans un sens de rotation.

4. Dispositif de pressage (2) selon la revendication 1 ou 2, la deuxième moitié de moule (32) pouvant être mise en rotation par rapport à la première moitié de moule (30) avec un mouvement de rotation oscillant, le mouvement de rotation oscillant comprenant un premier mouvement de rotation dans un premier sens de rotation et un deuxième mouvement de rotation suivant dans un deuxième sens de rotation opposé au premier sens de rotation.

5. Dispositif de pressage (2) selon l'une des revendications précédentes, la rotation de la deuxième moitié de moule (32) pouvant être terminée à une autre distance, réduite par rapport à la première distance, et le pressage pouvant être effectué après la fin de la rotation.

6. Dispositif de pressage (2) selon l'une des revendications précédentes, la première et la deuxième moitiés de moule (30, 32) sont conçues, plus particulièrement dans une zone radiale externe, de manière globalement plate et étant disposées de manière globalement parallèle entre elles.

7. Dispositif de pressage (2) selon l'une des revendications précédentes, le granulé (22) comprenant du polytétrafluoréthylène.

8. Procédé d'exploitation d'un dispositif de pressage (2) pour la fabrication d'une ébauche (50) pour une membrane d'un dispositif de vanne à partir d'un granulé (22), **caractérisé en ce que** le granulé (22) est disposé sur une première moitié de moule (30), **en ce qu'**une distance (34) entre une deuxième moitié de moule (32) et la première moitié de moule (30) avec le granulé (22) disposé entre les moitiés de moule (30, 32) est réduite pendant une rotation de la deuxième moitié de moule (32) par rapport à la première moitié de moule (30), et **en ce que** la deuxième moitié de moule (32) est pressée en direction de la première moitié de moule (30) pour la fabrication de l'ébauche (50).

9. Procédé selon la revendication 8, une broche de membrane (20) étant disposée, avant la disposition du granulé (22) dans un manchon (16) logé de manière suspendue et un déplacement du manchon (16) pendant la réduction de la distance (34) et/ou pendant le processus de pressage étant limité par une butée (38).

10. Procédé selon la revendication 8 ou 9, la deuxième moitié de moule (32) étant mise en rotation par rapport à la première moitié de moule (30) avec une vitesse de rotation constante dans un sens de rotation.

11. Procédé selon la revendication 8 ou 9, la deuxième moitié de moule (32) étant mise en rotation par rapport à la première moitié de moule (30) avec un mouvement de rotation oscillant, le mouvement de rotation oscillant comprenant un premier mouvement de rotation dans un premier sens de rotation et un deuxième mouvement de rotation suivant dans un deuxième sens de rotation opposé au premier sens de rotation.

12. Procédé selon l'une des revendications 8 à 11, la rotation de la deuxième moitié de moule (32) étant terminée à une distance supplémentaire, réduite par rapport à la première distance et le pressage étant effectué après la fin de la rotation.

13. Procédé selon l'une des revendications 8 à 12, la première et la deuxième moitiés de moule (30, 32) étant conçues de manière globalement plate, plus particulièrement dans une zone radiale externe et étant disposées de manière globalement parallèle entre elles.

14. Procédé selon l'une des revendications 8 à 13, le granulé (22) comprenant du polytétrafluoréthylène.
